# EUROPÄISCHE PATENTANMELDUNG

(11) **EP 0 552 449 A2**
(43) Veröffentlichungstag der Anmeldung: **28.07.1993**
(21) Anmeldenummer: 92120685.0
(22) Anmeldetag: 04.12.1992
(51) Int. Cl.: B07C 5/36, B07C 5/12

(54) **Verfahren und Anlage zum Sortieren von Pflanzen und zum Verpacken der sortierten Pflanzen**

(30) Priorität: 23.12.1991 DE 4142783
(71) Anmelder: Dümmen, Günter, D-47495 Rheinberg (DE)
(72) Erfinder: Dümmen, Günter, D-47495 Rheinberg (DE)
(74) Vertreter: Funken, Josef, Dipl.-Ing.

(57) **Zusammenfassung**

Es wird ein Verfahren zum Sortieren von jungen Pflanzen nach unterschiedlichen Größen oder Qualitäten, insbesondere nach normalgroßen, übergroßen und untergroßen Pflanzen beschrieben, wobei
a) die noch nicht sortierten Pflanzen in Reihe nebeneinander mit jeweils gleichen Abständen zueinander und in der Reihe geradlinig ausgerichtet in Kulturplatten (Trays) zu einer Übergabestation transportiert,
b) die in Reihen nebeneinander stehenden Pflanzen an der Übergabestation auch reihenweise aus den Kulturplatten entnommen und auf ein von den Kulturplatten distanziertes Haupttransportband übergeben,
c) die Pflanzen während ihrer Übergabe von den Kulturplatten auf das Haupttransportband bezüglich ihrer Größen oder Qualitäten gemessen,
d) die einzelnen Meßwerte mittels einer elektrischen Datenverarbeitungsanlage elektronisch verarbeitet und gespeichert und
e) die Pflanzen auf dem Haupttransportband transportiert und nach ihren Größen oder Qualitäten, insbesondere nach normalgroßen, übergroßen und untergroßen Pflanzen sortiert werden.

## Beschreibung

Die Erfindung betrifft ein Verfahren zum Sortieren von Pflanzen und ein Verfahren zum Verpacken von sortierten Pflanzen.

Der Erfindung liegt zunächst die Aufgabe zugrunde, ein Verfahren zum Sortieren von Pflanzen zu schaffen, mit dem die Pflanzen vollautomatisch sortiert werden können.

Diese Aufgabe wird erfindungsgemäß gelöst durch ein Verfahren zum Sortieren von jungen Pflanzen nach unterschiedlichen Größen oder Qualitäten, insbesondere nach normalgrossen, übergroßen und untergroßen Pflanzen, wobei
a) die noch nicht sortierten Pflanzen in Reihe nebeneinander mit jeweils gleichen Abständen zueinander und in der Reihe geradlinig ausgerichtet in Kulturplatten (Trays) zu einer Übergabestation transportiert,
b) die in Reihen nebeneinander stehenden Pflanzen an der Übergabestation auch reihenweise aus den Kulturplatten entnommen und auf ein von den Kulturplatten distanziertes Haupttransportband übergeben,
c) die Pflanzen während ihrer Übergabe von den Kulturplatten auf das Haupttransportband bezüglich ihrer Größen oder Qualitäten gemessen,
d) die einzelnen Meßwerte mittels einer elektrischen Datenverarbeitungsanlage elektronisch verarbeitet und gespeichert und
e) die Pflanzen auf dem Haupttransportband transportiert und nach ihren Größen oder Qualitäten, insbesondere nach normalgroßen, übergroßen und untergroßen Pflanzen sortiert werden.

Auf diese Weise gelangt man zu einem Verfahren zum Sortieren von Pflanzen, mit dem es möglich ist, die Pflanzen zunächst vollautomatisch nach unterschiedlichen Größen oder Qualitäten zu sortieren, bevor die Pflanzen anschließend größensortiert bzw. qualitätssortiert zu verpacken sind.

Das Verfahren kann zweckmäßig so weitergebildet sein, daß mehrere nebeneinander angeordnete und mit pflanzen gefüllte Kulturplatten (Trays) auf einem Transportboden zu der Übergabestation transportiert werden und daß die jeweils der Übergabestation am nächsten befindliche Reihe Pflanzen insgesamt und gleichzeitig aus den jeweils vordersten Trays angehoben, von hier auf das Transportband übergeben und während der Übergabe von den Trays zum Transportband fotografisch bezüglich ihrer Größe bzw. Qualität gemessen werden.

Hierdurch gelangt man zu einem Verfahren mit einem beliebig großen Durchsatz an Pflanzen, wobei dieser Durchsatz an Pflanzen lediglich davon abhängt, wieviel Pflanzen in einer Reihe in der Übergabestation aus den Trays entnommen werden.

Zweckmäßig kann das Verfahren so ausgebildet werden, daß die auf das Transportband übergebenen und hier abgesetzten Pflanzen in eine erste Sortiereinrichtung transportiert werden, in der die normalgroßen Pflanzen auf ein erstes Parallelband hinübergesetzt werden, worauf die auf dem Haupttransportband verbliebenen übergroßen und untergroßen Pflanzen auf dem Transportband weiter in eine zweite Sortierstation transportiert werden, in der die übergroßen Pflanzen auf ein zweites Parallelband hinübergesetzt werden, und wonach die untergroßen Pflanzen auf dem Haupttransportband weiter in eine dritte Sortierstation transportiert werden, in der die untergroßen Pflanzen auf ein drittes Parallelband hinübergesetzt werden.

Die Erfindung verfolgt außerdem das Ziel, ein Verfahren zum Verpacken von Pflanzen zu schaffen, mit dem die Pflanzen, insbesondere die größensortierten bzw. qualitätssortierten Pflanzen automatisch verpackt werden können.

Erfindungsgemäß wird dieses Ziel durch ein Verfahren zum Verpacken von jungen Pflanzen erreicht, die nach unterschiedlichen Größen oder Qualitäten, insbesondere nach normalgroßen, übergroßen und untergroßen Pflanzen, sortiert sind, wobei
a) jeweils die Pflanzen einer bestimmten Größe oder Qualität auf einem diesen Pflanzen zugeordneten Transportband in eine diesen Pflanzen zugeordnete Verpackungsstation transportiert werden,
b) die Pflanzen in der Verpackungsstation von oben her in einen Verpackungsrost eingefüllt werden,
c) die Pflanzen aus dem Verpackungsrost auf einen unter dem Verpackungsrost gehaltenen noch ungefalteten Karton gestellt werden und
d) der Karton um die Pflanzen herum gefaltet und geschlossen wird.

Dadurch ist es möglich, aus dem Verfahren kartonweise verpackte Pflanzen zu entnehmen, wobei alle im gleichen Karton befindlichen Pflanzen weitgehend gleiche Größe oder Qualität haben, so daß es Kartons mit normal entwickelten Pflanzen von normaler Größe, Kartons mit stärker entwickelten übergroßen Pflanzen und Kartons mit schwächer entwickelten untergroßen Pflanzen gibt, die entsprechend der Entwicklung der Pflanzen zu unterschiedlichen Konditionen am Blumenmarkt angeboten werden können.

Das Verfahren kann zweckmäßig so durchgeführt werden, daß bei Vorliegen von normalgroßen, übergroßen und untergroßen Pflanzen die normalgroßen pflanzen auf einem ersten Parallelband in eine erste Verpackungsstation, die übergroßen Pflanzen auf einem zweiten Parallelband in eine zweite Verpackungsstation und die untergroßen Pflanzen auf einem dritten Parallelband in eine dritte Verpackungsstation transportiert werden, daß die Pflanzen in den jeweiligen Verpackungsstationen von oben her in die Verpackungsroste der Verpackungsstationen eingefüllt werden, daß die Pflanzen aus den Verpackungsrosten auf jeweils unter den Verpackungsrosten gehaltene noch ungefaltete Kartons gestellt werden und daß die Kartons um die Pflanzen herum gefaltet und geschlossen werden.

Zweckmäßig können die Pflanzen in der jeweiligen Verpackungsstation reihenweise und zeilenweise in einen Verpackungsrost gefüllt, hier vorverpackt und anschließend in einem Karton verpackt werden.

Die Erfindung betrifft auch eine Anlage zum Sortieren von Pflanzen und eine Anlage zum Verpacken von sortierten Pflanzen.

Der Erfindung liegt außerdem die Aufgabe zugrunde, eine Anlage zu schaffen, mit der die Pflanzen vollautomatisch nach Größe oder Qualität sortiert werden können.

Diese Aufgabe wird erfindungsgemäß gelöst durch eine Anlage zum Sortieren von jungen Pflanzen nach unterschiedlichen Größen oder Qualitäten, insbesondere nach normalgroßen, übergroßen und untergroßen Pflanzen, wobei
a) ein Transportboden zum Heranführen von Kulturplatten (Trays) mit in diesen befindlichen noch nicht sortierten Pflanzen vorgesehen ist, die in den Trays in Reihen nebeneinander mit jeweils gleichen Abständen zueinander und in der Reihe geradlinig ausgerichtet angeordnet sind,
b) am Ausgangsende des Transportbodens eine Übergabestation zum Übergeben der in Reihen nebeneinander ausgerichteten Pflanzen an die Übergabestation reihenweise von dem Transportboden auf ein vom Transportboden distanziertes Haupttransportband vorgesehen ist,
c) in Transportrichtung am Ende des Transportbodens eine Anzahl Hebestifte in einer geradlim gen Reihe vorgesehen ist, mit denen alle in den Trays nebeneinander befindlichen Pflanzen der jeweils ersten Reihe insgesamt und gleichzeitig mit Wurzelballen aus den Trays um eine bestimmte Höhe nach oben anzuheben sind,
d) die Übergabestation einen Übergabeträger mit Greifern aufweist,
e) die Übergabestation mit einer Meßeinrichtung zum Messen der Pflanzen nach ihren unterschiedlichen Größen bzw. Qualitäten ausgerüstet ist,
f) eine Speichereinrichtung für die Speicherung der gemessenen Daten der einzelnen Pflanzen vorgesehen ist und
g) in Transportrichtung des Transportbandes für den Weitertransport der zu sortierenden Pflanzen hintereinander mehrere Sortierstationen, insbesondere eine erste Sortierstation, eine zweite Sortierstation und eine dritte Sortierstation zum Sortieren der noch unsortierten Pflanzen vorgesehen sind.

Auf diese Weise gelangt man zu einer Anlage zum Sortieren von Pflanzen, mit der es möglich ist, die Pflanzen zunächst vollautomatisch nach unterschiedlichen Größen bzw. Qualitäten zu sortieren, damit die Pflanzen anschließend größensortiert bzw. qualitätssortiert zu verpacken sind. Die Anzahl der Hebestifte entspricht der Anzahl der in einer Reihe nebeneinander angeordneten Pflanzen, damit alle einer gemeinsamen Reihe zugehörigen Pflanzen gemeinsam und gleichzeitig aus den Trays angehoben werden können.

Als Speichereinrichtung ist zweckmäßig ein Computer bzw. ein Rechner vorgesehen. Mit einer derartigen Speichereinrichtung bzw. einem Computer ist es ohne weiteres möglich, eine nahezu beliebig große Zahl von Daten zu messen, in den Computer einzugeben, hier zu speichern und anschließend wieder abzurufen, so daß eine Sortierung der Pflanzen nach beliebig vielen Größen oder Qualitäten ohne weiteres möglich ist. Für den praktischen Bedarf genügt es normalerweise, die Pflanzen in drei verschiedene Größen einzuteilen, nämlich in die in der Überzahl vorliegenden Pflanzen von normaler Größe und in die jeweils in geringerer Anzahl vorliegenden Pflanzen von übergroßer und von untergroßer Größe, wobei zusätzlich noch eine vierte Qualität von für den Verkauf ungeeigneten Pflanzen berücksichtigt wird, nämlich die übermäßig kleinen bzw. die nicht angewachsenen oder aufgegangenen Pflanzen.

Zweckmäßig kann die Anlage so ausgebildet sein, daß in der Übergabestation der Übergabeträger um eine parallel zum Haupttransportband angeordnete Achse schwenkbeweglich angeordnet ist und eine Anzahl Greifer für jeden Wurzelballen hat, mit denen die Wurzelballen zu erfassen und auf das Haupttransportband abzusetzen sind.

Hierbei erstreckt sich der Übergabeträger über die gesamte Breiie des Transportbodens, wobei die Anzahl der Greifer der Anzahl der in einer Reihe angeordneten Pflanzen entspricht, damit alle Pflanzen einer Reihe gleichzeitig und gemeinsam von dem Übergabeträger bzw. von den am Übergabeträger angeordneten Greifern erfaßt und in der Übergabestation vom Tray auf das Haupttransportband übergesetzt werden können.

Auf dem Haupttransportband ist zweckmäßig im Bereich des Übergabeträgers eine Anzahl von rohrförmigen Aufnahmebehältern für die Aufnahme der Pflanzen vorgesehen, oberhalb derer sich nach unten verjüngende Fülltrichter vorgesehen sind, in die die Pflanzen von dem Übergabeträger hineinzugeben sind und von denen aus die Pflanzen in die Aufnahmebehälter gelangen.

Wenn der Übergabeträger mit den von seinen Greifern erfaßten Pflanzen genau oberhalb der Fülltrichter steht, öffnen die Greifer, so daß die Pflanzen zunächst in die oben vergleichsweise breiten Fülltrichter gelangen und von diesen aus weiter nach unten in die Aufnahmebehälter fallen. Die Aufnahmebehälter haben keinen Boden, sondern stehen mit offenem unteren Ende auf dem Obertrum des vorwärtsführenden Transportbandes, so daß die in den Aufnahmebehältern stehenden Pflanzen mit ihren Wurzelballen ebenfalls auf dem Obertrum des vorwärtsführenden Haupttransportbandes stehen.

In weiterer Ausgestaltung der Erfindung kann die Anlage so ausgebildet sein, daß die erste Sortierstation ein erstes Parallelband aufweist und daß eine der Anzahl der in einer Reihe befindlichen Pflanzen entsprechende bestimmte Anzahl von Schubkolbengetrieben in Form von Zylindern mit Saugnäpfen an dem Kolbenstangenende vorgesehen sind, mit denen entsprechend den gespeicherten Daten der in der Übergabestation durchgeführten Messungen der Pflanzengrößen oder Pflanzenqualitäten die Aufnahmebehälter mit den normalgroßen Pflanzen von dem Haupttransportband auf das erste Parallelband hinüberzubringen sind.

Es empfiehlt sich, daß die zweite Sortierstation ein zweites Parallelband aufweist und eine bestimmte andere Anzahl von Schubkolbengetrieben in Form von Zylindern mit Saugnäpfen an den Kolbenstangenenden vorgesehen ist, mit denen entsprechend den gespeicherten Daten der in der Übergabestation durchgeführten Messungen der Pflanzengrößen bzw. Pflanzenqualitäten die Aufnahmebehälter mit den übergroßen Pflanzen von dem Haupttransportband auf das zweite Parallelband hinüberzubringen sind.

Desgleichen ist es zweckmäßig, daß die dritte Sortierstation ein drittes Parallelband aufweist und eine bestimmte noch andere Anzahl von Schubkolbengetrieben in Form von Zylindern mit Saugnäpfen an dem Kolbenstangenende vorgesehen ist, mit denen entsprechend den gespeicherten Daten der in der Übergabestation durchgeführten Messungen der Pflanzengrößen bzw. Pflanzenqualitäten die Aufnahmebehälter mit den untergroßen Pflanzen von dem Haupttransportband auf das dritte Parallelband hinüberzubringen sind.

Zweckmäßigerweise sind die der ersten Sortierstation nachgeordneten weiteren Sortierstationen, abgesehen von der Anzahl der Schubkolbengetriebe, im wesentlichen wie die erste Sortierstation ausgebildet.

Die Erfindung verfolgt des weiteren das Ziel, eine Anlage zu schaffen, mit der die größensortierten bzw. qualitätssortierten Pflanzen vollautomatisch verpackt werden können.

Dieses Ziel wird erfindungsgemäß erreicht durch eine Anlage zum Verpacken von jungen Pflanzen, die nach unterschiedlichen Größen oder Qualitäten, insbesondere nach normalgroßen, übergroßen und untergroßen Pflanzen, sortiert sind, wobei
a) ein Haupttransportband vorgesehen ist, das aus einem auf der Vorderseite der Anlage angeordneten vorwärts laufenden Transportband und einem auf der Rückseite der Anlage angeordneten rückwärts laufenden Transportband besteht, und das Haupttransportband sich von einer Übergabestation bis zum Ende der Anlage erstreckt,
b) auf der Länge des Haupttransportbandes verteilt mehrere Sortierstationen und mehrere Verpackungsstationen vorgesehen sind,
c) in Transportrichtung des Haupttransportbandes im Anschluß an die Übergabestation eine erste Sortierstation vorgesehen ist, hinter der eine erste Verpackungsstation angeordnet ist und
d) im weiteren Verlauf des Haupttransportbandes eine zweite Sortierstation mit einer zweiten Verpakkungsstation und weiterhin eine dritte Sortierstation mit einer dritten Verpackungsstation vorgesehen sind.

Die Anlage ist zweckmäßig so ausgebildet, daß in Transportrichtung des Haupttransportbandes hinter der ersten Sortierstation eine erste Verpackungsstation vorgesehen ist, die einen oberen Füllrost, einen darunter befindlichen unteren Füllrost und einen höhenverlagerbaren Verpackungstisch aufweist.

Vorteilhafterweise ist der obere Füllrost mit zwei gegeneinander beweglichen Abdeckplatten abgedeckt und zwischen dem oberen und dem unteren Füllrost eine horizontalbewegliche Trennplatte vorgesehen.

In weiterer Ausgestaltung der Erfindung kann die Anlage so ausgebildet sein, daß mit Abstand oberhalb des oberen Füllrostes ein Schwenkträger mit einer bestimmten Anzahl von Greifern vorgesehen ist, mit denen eine zu bestimmende Anzahl von Aufnahmebehältern mit den normalgroßen Pflanzen von dem ersten Parallelband in Form einer ganzen Reihe gleichzeitig in eine vorbestimmte Positon oberhalb des oberen Rostes zu positionieren sind.

Auf der Seite des zurücklaufenden Haupttransportbandes können ein Kartonmagazin und eine Kartongebereinrichtung mit vier nach oben orientierten Saugnäpfen vorgesehen sein, mit der jeweils ein vorgefertigter noch ungefalteter Karton aus dem Kartonmagazin zu entnehmen und unter den unteren Füllrost zu halten ist.

Des weiteren kann die Anlage so ausgebildet sein, daß mit Abstand unterhalb des unteren Kartons ein höhenverstellbarer Verpackungstisch mit vier nach oben orientierten Saugnäpfen vorgesehen ist, auf dem der mit Pflanzen gefüllte Karton an den Seitenwänden und den oberen Flanschen geknickt bzw. gefaltet und fertig zu verpacken ist.

Zweckmäßig kann die Anlage so ausgebildet sein, daß ein den unteren Füllrost umfassendes höhenverlagerbares und in horizontaler Ebene in der Länge und Breite variierbares Rostgehäuse vorgesehen ist.

In zweckmäßiger Ausgestaltung der Erfindung kann das Rostgehäuse aus vier sich überlappenden Kantenbereichen bestehen, die in der horizontalen Ebene gemeinsam und gleichzeitig verlagerbar sind.

Desgleichen sind sinnvollerweise die der ersten Verpackungsstation nachgeordneten weiteren Verpackungsstationen im wesentlichen wie die erste Verpackungsstation ausgebildet.

Die Erfindung wird nachfolgend anhand eines in der Zeichnung dargestellten Ausführungsbeispieles des näheren erläutert. Es zeigen
- Fig. 1A und Fig. 1B: eine Draufsicht auf die erfindungsgemäß ausgebildete Vorrichtung, getrennt entlang der Linie A-B,
- Fig. 2A und Fig. 2B: eine Vorderansicht auf Figur 1 in Richtung des Pfeiles II in Figur 1, getrennt entlang der Linie C-D
- Fig. 3: eine Stirnansicht auf Figur 1 und Figur 2 in Richtung des Pfeiles III in Figur 1 und Figur 2,
- Fig. 4: einen Schnitt längs der Linie IV-IV in Figur 1A,
- Fig. 5: einen Ausschnitt aus Figur 1 im Bereich der Übergabestation in vergrößerter Darstellung,
- Fig. 6: einen Schnitt längs der Linie VI-VI in Figur 5,
- Fig. 7: eine Stirnansicht auf Figur 5 und Figur 6 in Richtung des Pfeiles VII in Figur 5 und Figur 6,
- Fig. 8: einen Schnitt längs der Linie VIII-VIII in Figur 9,
- Fig. 9: einen Schnitt längs der Linie IX-IX in Figur 8,
- Fig. 10: eine Ausschnittsdarstellung beim Beginn des Faltens des Kartons,
- Fig. 11: eine Draufsicht auf Figur 10 und
- Fig. 12: eine Darstellung des fertig gefalteten Kartons.

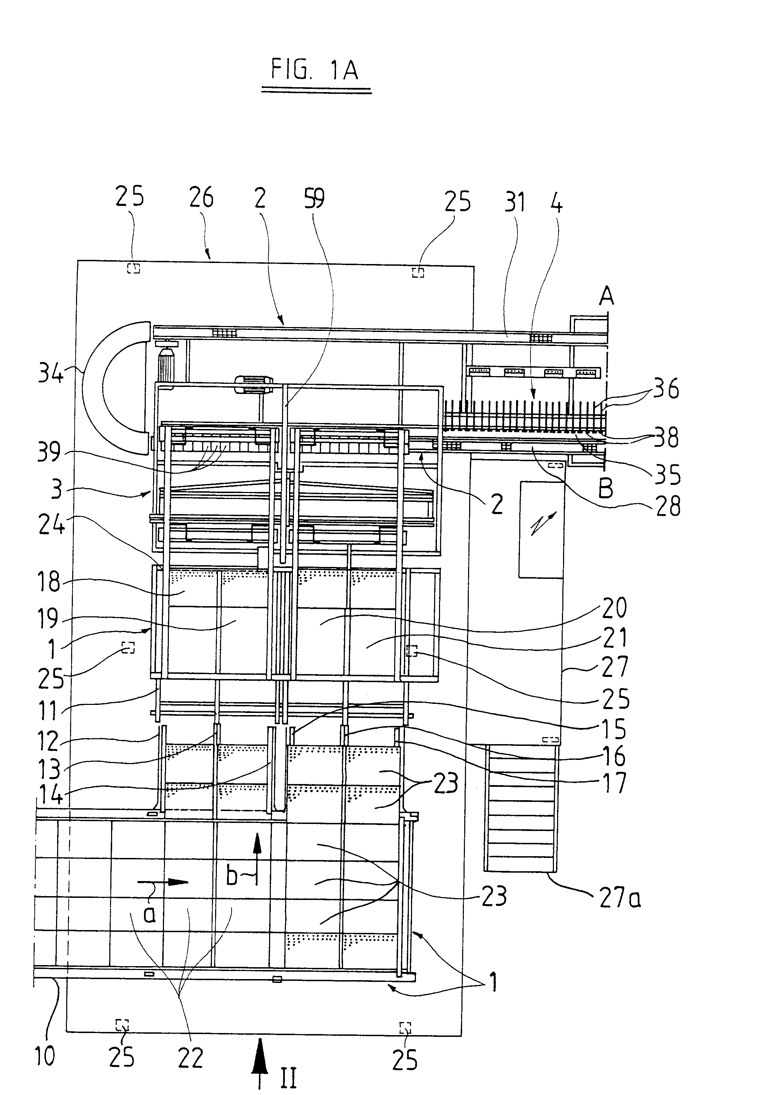

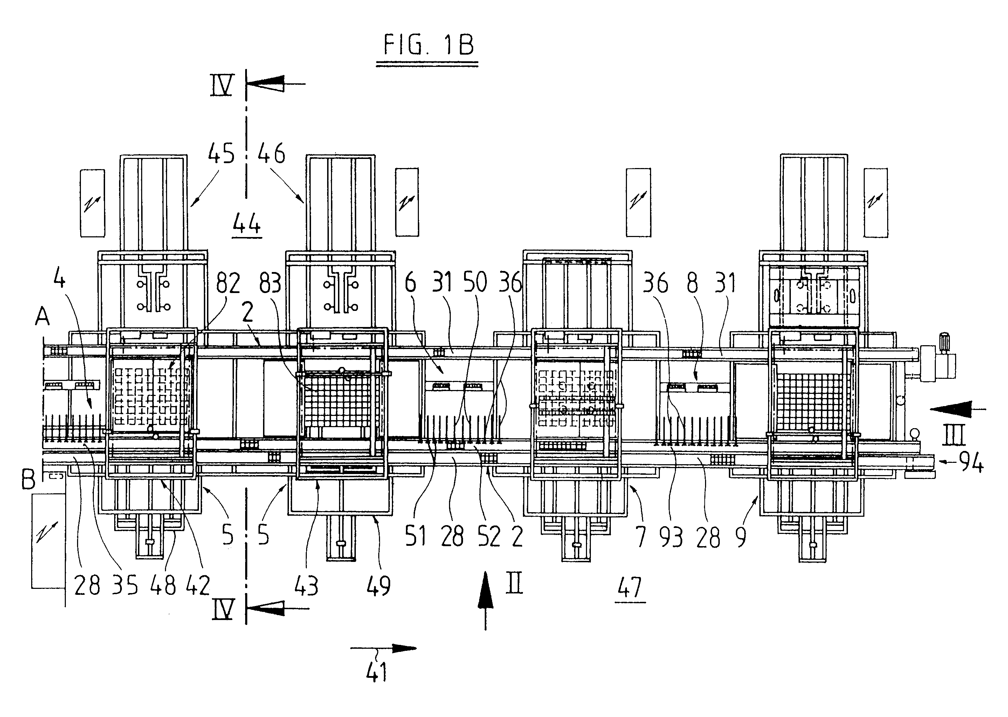

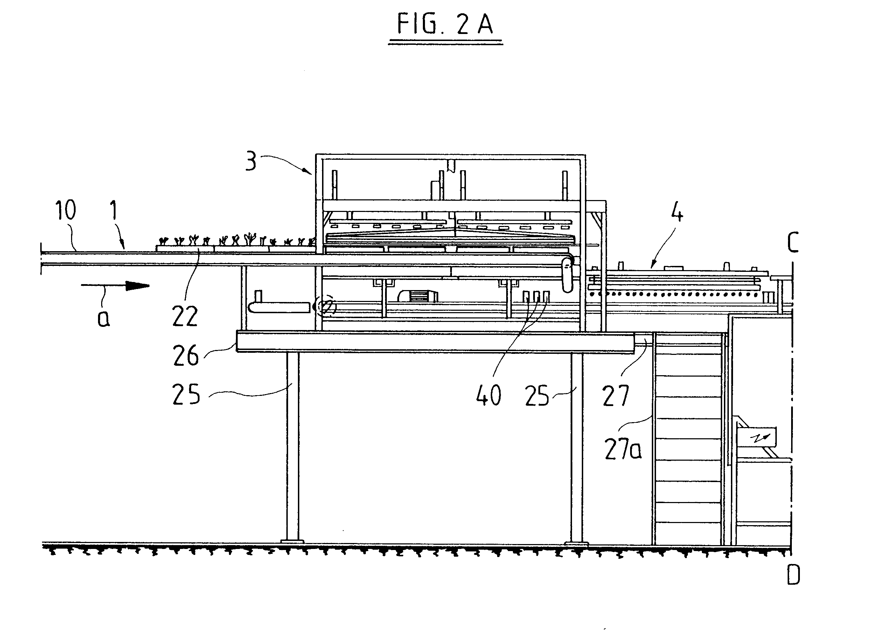

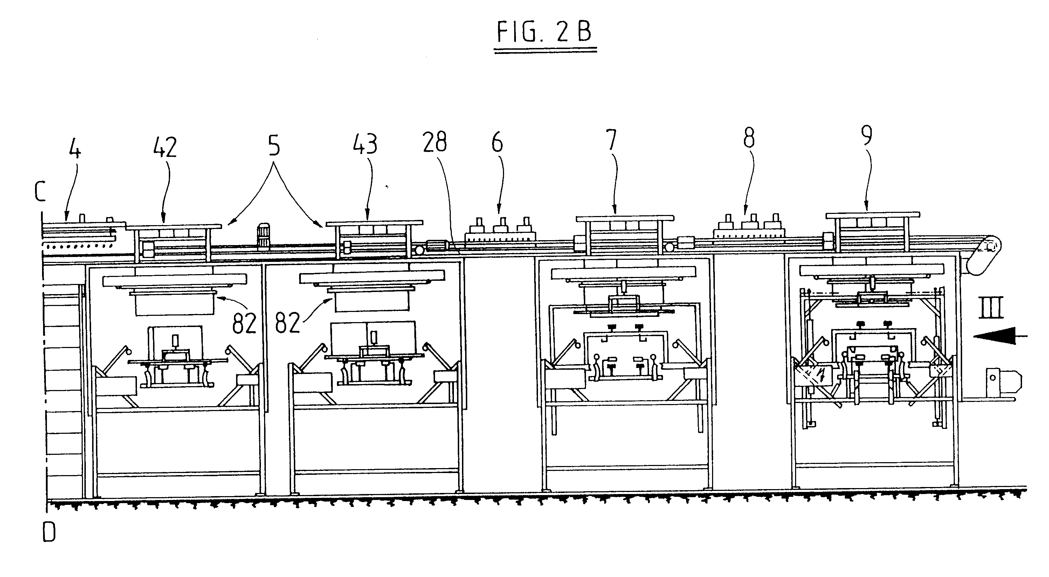

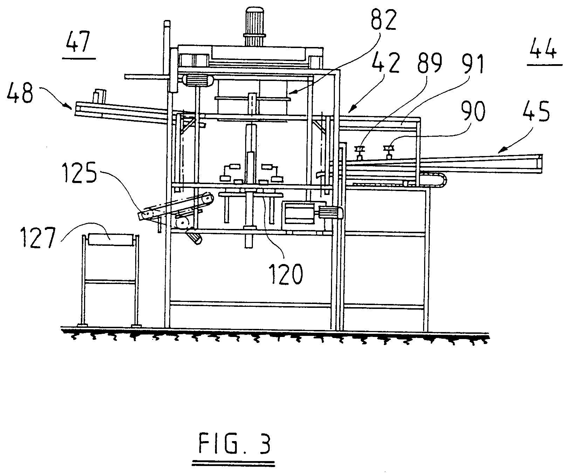

Wie sich zunächst aus der Gesamtdarstellung gemäß Figur 1, Figur 2 und Figur 3 ergibt, weist die Anlage einen Transportboden 1, ein Haupttransportband 2, eine Übergabestation 3 zwischen dem Transportboden 1 und dem Haupttransportband 2, eine erste Sortierstation 4, eine erste Verpackungseinrichtung 5, eine zweite Sortierstation 6, eine zweite Verpackungsstation 7, sowie eine dritte Sortierstation 8 und eine dritte Verpackungsstation 9 auf.

Der Transportboden 1 hat einen heranführenden Arm 10 und einen weiterführenden Arm 11, der Führungswände 12,13,14, 15,16,17 aufweist, zwischen denen vier Führungsbahnen 18,19,20,21 gebildet sind. Auf dem heranführenden Arm 10 ist eine Vielzahl von Trays 22,23 in Reihen nebeneinander und hintereinander angeordnet. Am Ende 24 des weiterführenden Armes 11 schließt sich die Übergabe- und Meßstation 3 an.

Der Transportboden 1 und die Übergabestation 3 sind auf einer auf mehreren Stützen 25 abgestützten Plattform 26 angeordnet, an der eine Bedienungsbühne 27 vorgesehen ist, an der eine Treppe 27a angeordnet ist.

In Transportrichtung der Trays 22,23 gesehen hinter der Übergabestation 3 befindet sich das Haupttransportband 2, auf dem eine Anzahl von vierundzwanzig Aufnahmebehältern 40 mit auf diesen angeordneten Einfülltrichtern 39 vorgesehen ist.

Das Haupttransportband 2 besteht aus einem vorwärts laufenden Transportband 28 mit Obertrum 29 und Untertrum 30 sowie aus einem rückwärts laufenden Transportband 31. Das vorwärts laufende Transportband 28 und das rückwärts laufende Transportband 31 sind am linken Ende hinter der Übergabestation 3 durch ein halbkreisförmiges Verbindungsband 34 verbunden, das ebenfalls ein Obertrum und ein Untertrum aufweist.

Im Bereich der ersten Sortierstation 4 ist neben dem vorlaufenden Transportband 28 ein erstes Parallelband 35 mit Obertrum 32 und Untertrum 33 vorgesehen, wobei das Parallelband 35 sich über den Bereich der ersten Sortierstation 4 und der ersten Verpackungseinrichtung 5 erstreckt. In Abstand von dem Parallelband 35 ist eine Anzahl von vierundzwanzig Pneumatikzylindern 36 vorgesehen, die in gleicher Höhe zwischen der Übergabestation 3 und der ersten Verpackungseinrichtung 5 in einer gemeinsamen Reihe fluchtend angeordnet sind. An den Enden der Kolbenstange 37 sind Saugnäpfe 38 vorgesehen. Die Pneumatikzylinder 36 sind so angeordnet, daß die Saugnäpfe 38 sich bei eingefahrener Kolbenstange 37 in Transportrichtung gesehen am linken Rand des ersten Parallelbandes 35 befinden. Bei ausgefahrener Kolbenstange 37 befinden sich die Saugnäpfe 38 in Transportrichtung gesehen am linken Rand des vorwärts laufenden Transportbandes 28. Die Saugnäpfe 38 der Zylinder 36 sind so ausgerüstet, daß sie vor den Saugnäpfen 38 stehende Aufnahmebehälter 40 von dem Transportband 28 auf das erste Parallelband 35 herüberziehen können.

Im Anschluß an die erste Sortierstation 4 ist in Transportrichtung, also in Richtung des Pfeiles 41 eine erste Verpackungseinrichtung 5 vorgesehen, die als Doppelstation ausgebildet ist und aus einer ersten Verpackungsstation 42 und einer weiteren gleich ausgebildeten Verpackungsstation 43 besteht. Auf der Rückseite 44 der Anlage ist je Verpackungsstation 42,43 ein Tragearm 45,46 zum taktweise Hereingeben von noch ungefaltenen Kartons aus einem Kartonmagazin vorgesehen. Auf der Vorderseite 47 der Anlage ist ein Hebearm 48,49 vorgesehen, mit dem der erst teilweise verpackte Karton weiterbehandelt wird.

In Transportrichtung hinter der Verpackungsstation 43 ist die zweite Sortierstation 6 vorgesehen, wobei zwischen dem vorwärts laufenden Transportband 28 und einer Reihe von Zylindern 50 mit Saugnäpfen 51 ein zweites Parallelband 52 vorgesehen ist. Die Sortierstation 6 hat eine Anzahl von sechzehn Pneumatikzylindern 36 und ist im übrigen wie die erste Sortierstation 4 ausgebildet.

Die weiter in Transportrichtung folgenden Verpackungsstationen 7 und 9 entsprechen der ersten Verpackungsstation 42 bzw. 43. Desgleichen entspricht die dritte Sortierstation 8 zwischen den Verpackungsstationen 7 und 9 der zweiten Sortierstation 6.

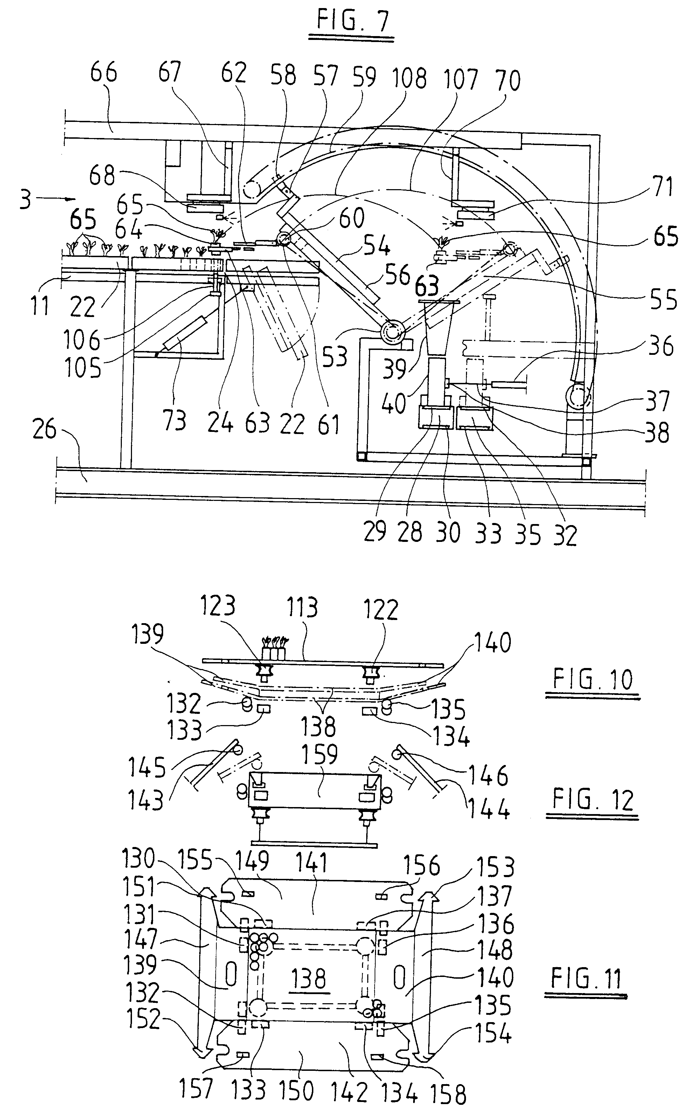

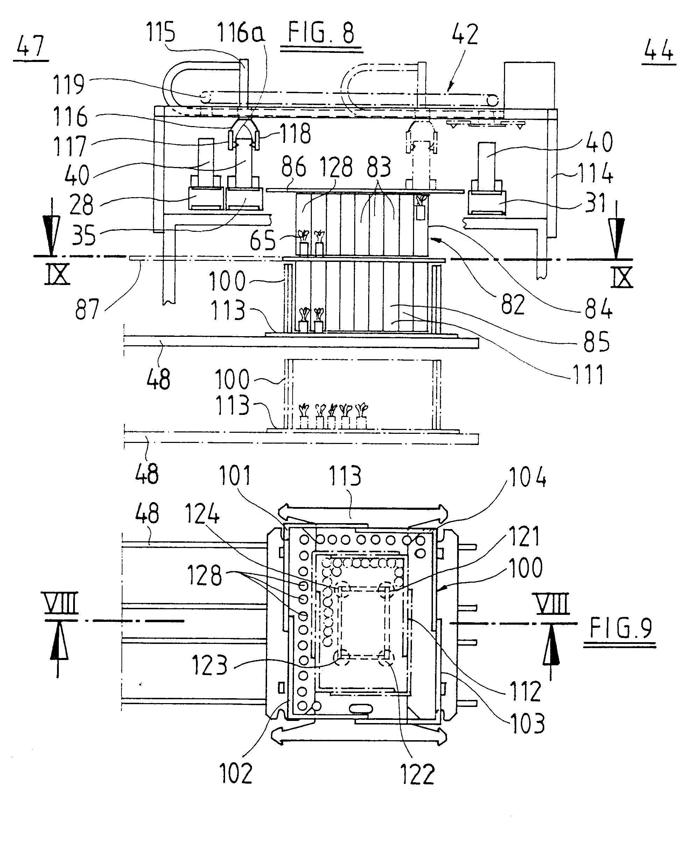

In der Übergabestation 3 ist zwischen dem vorderen Ende 24 des Armes 11 des Transportbodens 1 und dem gegenüberliegenden vorwärts laufenden Transportband 28 auf einer parallel zum Transportband 28 ausgerichteten und sich über die Breite des Transportbodens 1 erstreckende Schwenkachse 53 vorgesehen, an der ein Schwenkarm 54 von einer in Figur 7 links dargestellten ausgezogenen Stellung in eine in Figur 7 rechts dargestellte strichpunktierte Stellung 55 zu schwenken ist. An den Schwenkarm 54 ist ein Führungsarm 56 angeordnet, der an seinem oberen Ende 57 in einer gekrümmten Führung 58 auf einer gekrümmten Bahn 59 geführt ist.

Am oberen Ende 60 des Schwenkarmes 54 ist ein Greifbalken 61 vorgesehen, an dem über zugeordnete Gestänge 62 eine Anzahl von vierundzwanzig Greifern 63 vorgesehen sind, mit denen die Wurzelballen 64 der einzelnen Pflanzen 65 zu greifen sind.

An einer an einem Gerüst 66 angeordneten Halterung 67 ist mit Abstand oberhalb der einzelnen Pflanzen 65 eine Anzahl von vierundzwanzig Kameras 68 vorgesehen. Diesen Kameras 68 gegenüberliegend ist auf der gleichen Höhe in Figur 7 weiter rechts an einer Halterung 70 ebenfalls eine Anzahl von vierundzwanzig Kameras 71 angeordnet, die mit einem Computer verbunden sind, in dem die von den Kameras 68,71 gemessenen Daten gespeichert werden und später abgerufen werden können.

Oberhalb des vorlaufenden Transportbandes 28 ist eine Anzahl von vierundzwanzig quadratischen Aufnahmebehältern 40 nebeneinander angeordnet, wobei oberhalb eines jeden Aufnahmebehälters 40 ein nach oben konisch sich erweiternder Einfülltrichter 39 vorgesehen ist.

An dem Gerüst 66 sind mehrere Zylinder 73 vorgesehen, mit denen die entleerten Trays 22,23 weggenommen und nach unten befördert werden.

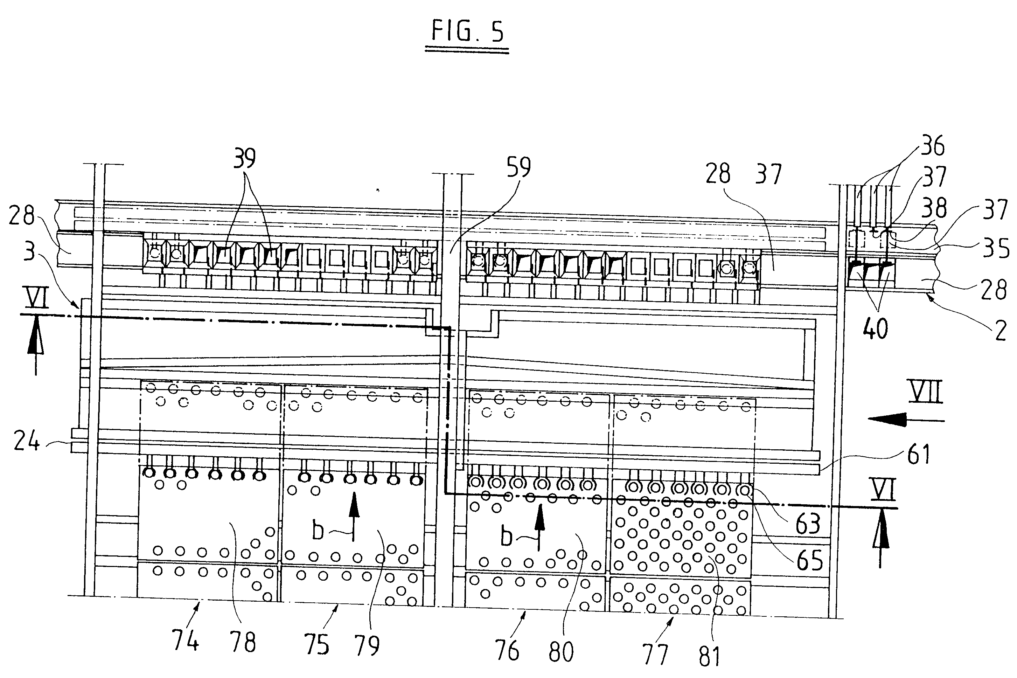

Figur 5 zeigt den Endbereich des Transportbodens 1, wobei die Trays in vier Reihen 74,75,76,77 hintereinander angeordnet sind, wobei das in jeder Reihe 74,75,76,77 vorderste Tray 78,79,80,81 mittels des Schwenkarmes 61 und der Greifer 63 zu entleeren sind.

Die aus den Trays 78 bis 81 entnommene Reihe von Pflanzen 65 sind nach Durchlaufen der Übergabestation 3 in die dem Ende des Transportbodens gegenüber auf dem vorwärts laufenden Transportband 28 nebeneinander stehenden vierundzwanzig Einfülltrichter 39 fallengelassen, durch die sie in vierundzwanzig darunter befindliche Aufnahmegefäße 40 gelangen.

Im Bereich der Verpackungsstation 42 befinden sich auf der Vorderseite 47 der Anlage das vorwärts laufende Transportband 28 und das erste Parallelband 35. Am Ende der Verpackungsstation 42 in Transportrichtung ist ein Anschlag für die Aufnahmegefäße 40 vorgesehen. Neben dem ersten Parallelband 35 ist ein Füllrost 82 vorgesehen, der zwölf mal neun Rostöffnungen 83 aufweist. Der Füllrost 82 besteht aus einem Oberrost 84 und einem Unterrost 85. Auf der oberen Fläche des Oberrostes 84 sind zwei gegeneinander bewegliche Schließplatten 86 vorgesehen, mit denen der Oberrost 84 reihenweise freizulegen ist, damit die einzufüllenden pflanzen ebenfalls reihenweise in den Oberrost 84 eingefüllt werden können.

Zwischen dem Oberrost 84 und dem Unterrost 85 ist eine Trennplatte 87 vorgesehen, die den Oberrost 84 und den Unterrost 85 normalerweise voneinander trennt, den Unterrost 85 jedoch insgesamt öffnet, wenn der Oberrost 84 mit Pflanzen gefüllt ist, damit die Pflanzen aus dem Oberrost 84 gemeinsam in den Unterrost 85 fallen können.

Auf der Rückseite 44 der Anlage ist der Tragearm 45 vorgesehen, der an seinem vorderen Ende vier Saugnäpfe 89,90 aufweist, mit denen die in einem Kartonmagazin 91 übereinander gestapelten noch ungeknickten Kartons 92 zu entnehmen und unter die untere Seite des Unterrostes 85 zu halten sind. Der Tragearm 45 ist um sein äußeres Ende schwenkbar, so daß er zum Hereintransportieren eines Kartons 92 die erforderlichen Bewegungen ausführen kann.

Auf der Vorderseite 47 der Anlage ist ein Hebearm 48 vorgesehen, mit dem der ungefaltete Karton gehalten wird, während der Tragearm 45 den gefalteten und verpackten Karton 159 aus der Anlage herausbewegt und der Karton 159 mittels eines weiteren Transportbandes 125 auf ein Abtransportband 127 befördert wird.

Unterhalb des Füllrostes 82 befindet sich ein höhenverstellbarer Ständer 120 mit vier Saugnäpfen 121,122,123, 124 mit dessen Hilfe der zu faltende Karton 113 gefaltet wird.

Der Unterrost 85 ist von einem Rostgehäuse 100 umgeben, das aus vier aufrecht stehenden rechtwinkligen Gehäuseteilen 101,102,103,104 gebildet ist, die teleskopartig gegeneinander verschiebbar sind, so daß die lichte Weite des Rostgehäuses 100 geändert werden kann. Das Rostgehäuse 100 hat zwei gegenüberliegende äußere Wandteile 101,103 und zwischen diesen beiden zwei innere Wandteile 102,104, die durch nicht näher dargestellte Antriebe gegeneinander verschoben werden können.

Beim Betrieb der erfindungsgemäß ausgebildeten Anlage werden auf dem Arm 10 des Tragbodens 1 mit jungen Pflanzen 65 gefüllte Trays 22,23 in Richtung der Pfeile a und b transportiert. Dabei werden die Trays 22,23 in vier Reihen nebeneinander in den Bahnen 18,19,20,21 in Richtung des Pfeiles b zur Übergabestation 3 transportiert. Die am Ende 24 des Armes 18 des Tragbodens 1 befindlichen Trays werden in der Übergabestation 3 entleert.

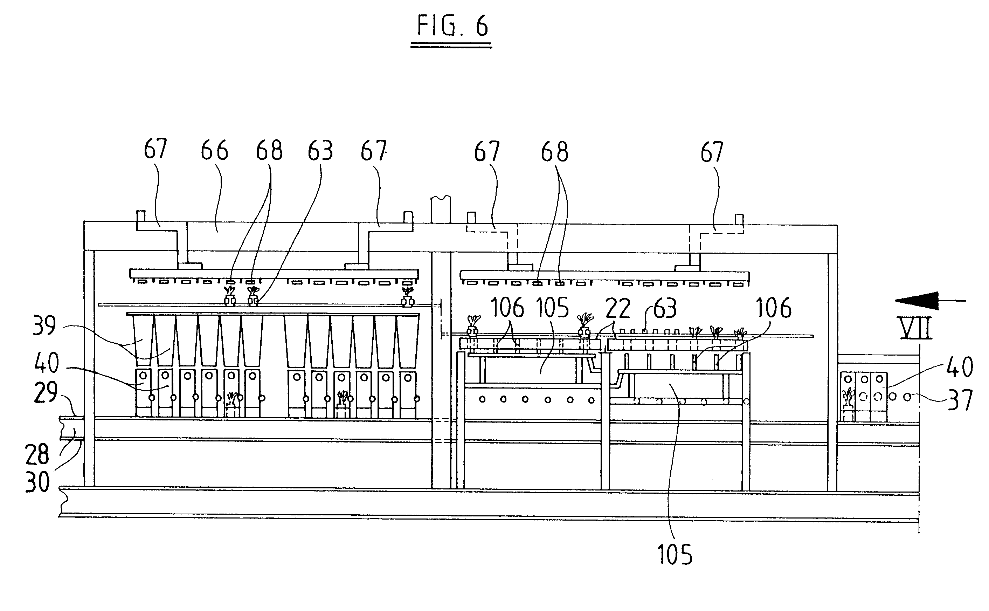

Am vorderen Ende 24 des Armes 11 ist ein Balken 105 vorgesehen, an dem eine Anzahl von vierundzwanzig nach oben gerichteten Stiften 106 vorgesehen sind, die bei Anheben des Balkens 105 durch in den Böden der Trays 22 vorgesehene Öffnungen hindurchtreten und die Wurzelballen 64 der Pflanzen 65 soweit aus den Trays 22 heraus nach oben drücken, daß sie sich geringfügig oberhalb der Oberkante der Trays 22 befinden, wie in der rechten Hälfte der Figur 6 dargestellt ist. Im rechten Bereich der rechten Hälfte der Figur 6 befinden sich die Pflanzen 65 noch in ihrer ursprünglichen Lage innerhalb der Trays 22. Gemäß der links daneben dargestellten Situation sind die Wurzelballen 64 von den Stiften 106 hochgehoben Nunmehr ist die gesamte erste Reihe der in vier nebeneinander angeordneten Trays 22 befindlichen Pflanzen 65, nämlich eine Anzahl von vierundzwanzig Pflanzen 65 durch die Stifte 106 hochgehoben.

Anschließend wird der Greifbalken 61 mit einer Anzahl von vierundzwanzig Greifern 63 so in die Nähe der Wurzelballen 64 der Pflanzen 65 gebracht, daß alle vierundzwanzig Pflanzen 65 gleichzeitig von den vierundzwanzig Greifern 63 erfaßt werden. Daran anschließend wird der Greifbalken 61 zur anderen Seite hin geschwenkt und beschreibt dabei einen Kreisbogen 107, während die Pflanzen 65 sich auf dem Kreisbogen 108 bewegen. Bei der Bewegung auf dem Kreisbogen 108 werden die Pflanzen 65 durch die Kameras 68,71 fotografiert und dabei bezüglich ihrer Größen oder Qualitäten gemessen. Bei diesen Messungen werden die Größen oder Qualitäten der einzelnen Pflanzen festgestellt und in einem Computer gespeichert.

Wenn der Greifbalken 61 seine Schwenkbewegung vollständig beendet hat, befinden sich die Pflanzen 65 in der rechten Position oberhalb der vierundzwanzig nebeneinander angeordneten Einfülltrichter 39. In dieser Stellung werden die Greifer 63 geöffnet, so daß die Pflanzen 65 durch den Einfülltrichter 39 in die vierundzwanzig nebeneinander angeordneten Aufnahmegefäße 40 fallen. Diese Situation ist in der linken Hälfte der Figur 6 veranschaulicht.

Wenn die vierundzwanzig Pflanzen 65 sich in den Aufnahmegefäßen 40 gegenüber der Übergabestation 3 befinden, werden diese auf dem vorwärts laufenden Transportband 28 in die erste Sortierstation 4 transportiert. Hier werden sie aufgrund eines am Ende der ersten Sortierstation 4 angeordneten Anschlages ohne gegenseitigen Abstand unmittelbar nebeneinander gestellt, so daß jedes Aufnahmegefäß 40 sich gegenüber einem der vierundzwanzig Pneumatikzylinder 36 der ersten Sortierstation 4 befindet. Wenn die erste Sortierstation 4 mit vierundzwanzig Aufnahmegefäßen 40 gefüllt ist, werden nur diejenigen Pneumatikzylinder von dem Computer aktiviert, denen gegenüber sich ein Aufnahmegefäß 40 mit einer normalgroßen Pflanze befindet. Nur diejenigen Pneumatikzylinder, die den ausgesuchten normalgroßen Pflanzen gegenüberliegen, werden durch den Computer aktiviert, wodurch die Saugnäpfe 38 der aktivierten Pneumatikzylinder 36 fest gegen die Aufnahmegefäße 40 gedrückt und anschließend evakuiert werden. Im Anschluß daran werden die Kolbenstangen 37 der aktivierten Pneumatikzylinder 36 eingefahren und dadurch die Aufnahmegefäße 40 mit den ausgesuchten normalgroßen Pflanzen auf das erste Parallelband 35 gezogen. Von hieraus werden die Aufnahmegefäße 40 mit den normalgroßen Pflanzen auf dem ersten Parallelband 35 solange weitertransportiert bis mindestens zwölf Aufnahmegefäße 40 sich in der ersten Verpackungsstation 42 befinden. Die darüberhinaus anstehenden Aufnahmegefäße 40 werden weitertransportiert in die Verpackungsstation 43. In den beiden Verpackungsstationen 42,43, die die Verpackungseinrichtung 5 bilden, werden die Pflanzen 65 verpackt.

Die in der ersten Sortierstation 4 nicht ausgewählten übergroßen und untergroßen Pflanzen werden auf dem vorwärts laufenden Transportband 28 weitertransportiert bis in die zweite Sortierstation 6. Wenn diese mit sechzehn Aufnahmegefäßen 40 mit übergroßen und untergroßen Pflanzen gefüllt ist, werden hier die Aufnahmegefäße 40 mit übergroßen Pflanzen in der gleichen Weise ausgewählt wie die normalgroßen Pflanzen vorher in der ersten Sortierstation 4 ausgewählt worden sind. Diese ausgewählten übergroßen Pflanzen werden in die zweite Verpackungsstation 7 transportiert und hier verpackt, wie weiter unten ausgeführt ist.

Die Kolbenstangen 37 der Pneumatikzylinder 36 fahren soweit aus, bis die Saugnäpfe 38 fest gegen die Wand der Aufnahmegefäße 40 liegen. In dieser Position werden die Saugnäpfe 38 evakuiert. Anschließend werden die Kolbenstangen 37 eingefahren, wodurch die Aufnahmegefäße 40 mit den übergroßen Pflanzen von dem vorwärts laufenden Transportband 28 auf das zweite Parallelband 52 herübergezogen werden.

Die in der zweiten Sortierstation 6 nicht ausgewählten untergroßen Pflanzen werden auf dem vorwärts laufenden Transportband 28 weiter bis in die dritte Sortierstation 8 transportiert. Hier werden die untergroßen Pflanzen wie vorstehend bereits in der zweiten Sortierstation 6 ausgewählt und vom vorwärts laufenden Transportband 28 auf das dritte Parallelband 93 gezogen. Die Aufnahmegefäße 40 mit den ausgewählten untergroßen Pflanzen werden anschließend in die dritte Verpackungsstation 9 transportiert.

Die in der dritten Sortierstation 8 nicht ausgewählten Pflanzen werden auf dem vorwärts laufenden Transportband 28 in den Ausschuß 94 weitertransportiert. In diesen übrig gebliebenen Aufnahmegefäßen 40 befinden sich entweder keine Pflanzen oder Pflanzen, die sich nicht genügend entwickelt haben.

In der Verpackungsstation 42 ist zuoberst an einem Gerüst 109 ein Verpackungsrost 82 vorgesehen, der aus einem Oberrost 84 und einem Unterrost 85 besteht. Auf dem Oberrost befindet sich ein Abdeckboden 86, der aus zwei in der gemeinsamen Ebene horizontal verschieblich angeordneten Platten besteht. Der Oberrost 84 hat einhundertacht Rostöffnungen 83 in einer Anordnung von zwölf mal neun Rostöffnungen 83 zur Aufnahme der Pflanzen.

Zwischen dem Oberrost 84 und dem Unterrost 85 ist ein Trennboden 87 vorgesehen, mit dem der Durchtritt vom Oberrost 84 zum Unterrost 85 vollständig geöffnet werden kann. Der Unterrost 85 enthält Rostöffnungen 111 in der gleichen Anzahl und Anordnung der Rostöffnungen 83 im Oberrost 84.

Der Unterrost 85 ist mit einem Rostgehäuse 100 umgeben, der aus vier rechtwinklig ausgebildeten Seitenteilen 101, 102,103,104 besteht. Dabei liegen die Seitenteile 101,103 außen und die Seitenteile 102,104 innen. Diese vier Seitenteile sind durch je einen im einzelnen nicht dargestellten Antrieb in Längsrichtung und Querrichtung jeweils gegeneinander verschiebbar, so daß das Rostgehäuse 100 aus der in Figur 9 ausgezogen dargestellten Lage mit großem lichten Querschnitt in die in Figur 9 strichpunktiert dargestellte innere Lage 112 mit entsprechend kleinerem lichten Durchmesser zu bringen ist.

Unterhalb des Rostgehäuses 100 ist ein ungefaltener Karton 113 vorgesehen, der von dem Haltearm 48 gehalten ist.

Oberhalb des Verpackungsrostes 82 ist an einem Gestell 114 ein sich über die Breite des Verpackungsrostes 82 erstreckender Greifarm 115 vorgesehen, an dem eine Greifzange 116 mit Greifwangen 117,118 vorgesehen ist. Der Greifarm 115 ist oberhalb des Verpackungsrostes 82 mittels der Antriebseinheit 119 verschieblich und in beliebigen Positionen festzuhalten.

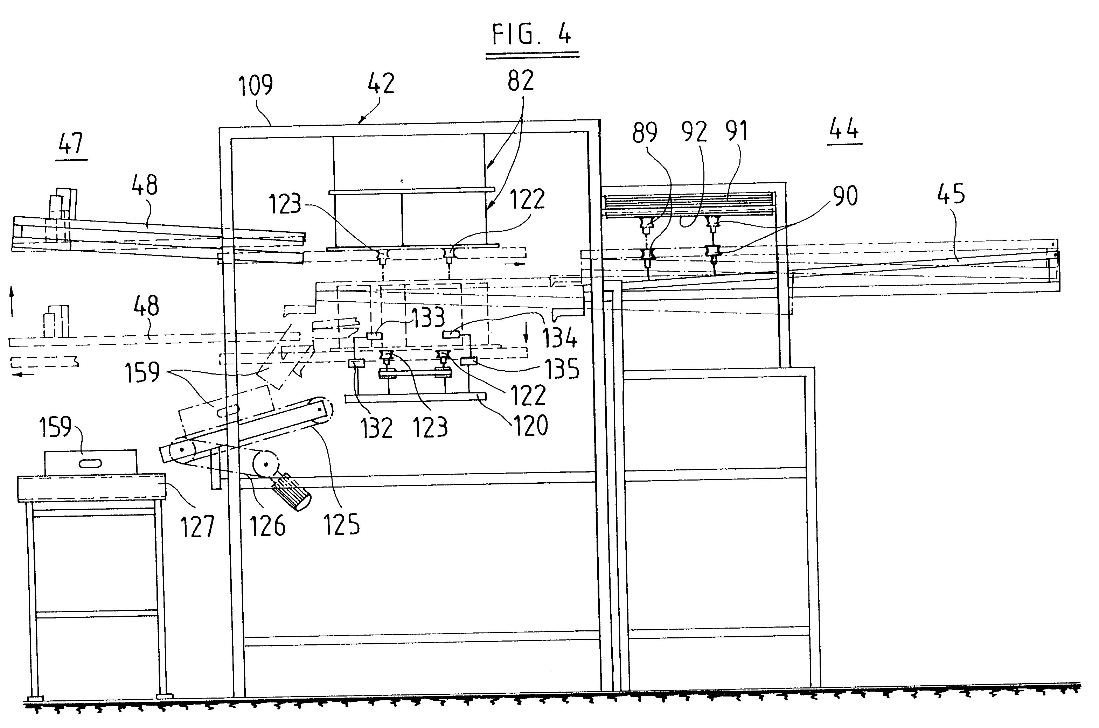

In Transportrichtung neben dem Verpackungsrost 82 ist ein Kartonmagazin 91 vorgesehen, unter dem der Tragearm 45 angeordnet ist. Der Tragearm 45 hat vier Saugnäpfe, von denen in Figur 4 zwei Saugnäpfe 89,90 sichtbar sind. Mit dem Tragearm 45 sind im Takt der Anlage noch ungefaltete Kartons 92 unter den Unterrost 85 zu bringen.

Auf der dem Tragearm 45 gegenüberliegenden Seite ist der Haltearm 48 vorgesehen, der innerhalb eines bestimmten Höhenbereiches zwischen dem unteren Bereich des Verpackungsrostes 82 höhenverstellbar angeordnet ist.

Unterhalb des Verpackungsrostes 82 ist ein Verpackungstisch 120 mit vier Saugnäpfen 121,122,123,124 vorgesehen, von den in Figur 4 die Saugnäpfe 122 und 123 sichtbar sind. Der Verpackungstisch 120 ist unterhalb des Verpackungsrostes 82 in einem bestimmten Höhenbereich verstellbar.

Im unteren Bereich ist ein weiteres Transportband 125 vorgesehen, das durch einen Antrieb 126 angetrieben ist.

Außerdem ist auf der Vorderseite 47 der Anlage ein abführendes Transportband 127 vorgesehen, das seitlich entlang der Anlage geführt ist.

Wenn in der ersten Verpackungsstation 42 auf dem ersten Parallelband 35 eine Anzahl von zwölf Aufnahmegefäßen 40 nebeneinander steht, werden die Gefäße 40 mit den ausgesuchten normalgroßen Pflanzen von einer oberhalb der Aufnahmegefäße 40 befindlichen Greifzange 116 erfaßt und durch Positioniernoppen 116a, welche in die in den Aufnahmegefäßen vorgesehenen Löcher greifen, positioniert.

Anschließend werden die zwölf Aufnahmegefäße 40 über den Abdeckboden 86 bis zur ersten Reihe 128 der Rostöffnungen 83 geführt. Sobald die Aufnahmegefäße 40 genau oberhalb der Reihe 128 positioniert sind, werden die zwei den Abdeckboden 86 bildenden gegeneinanderliegenden Platten so verschoben, daß die Rostöffnungen 83 der ersten Reihe 128 nach oben hin offen sind, worauf die in den Aufnahmegefäßen 40 befindlichen Pflanzen in die Rostöffnungen 83 der ersten Reihe 128 fallen können. Anschließend wird der Abdeckboden 86 wieder geschlossen. Gleichzeitig wird der Greifarm 115 mit den Aufnahmegefäßen 40 weiter über die Abdeckplatte 86 bis zur Rückseite 44 der Anlage geführt und setzt auf dem rückwärtslaufenden Transportband 31 die leeren Aufnahmegefäße 40 ab, damit diese wieder zurück zur Übergabestation 3 geführt werden, um dort erneut gefüllt werden zu können.

Wenn der Oberrost 84 vollständig mit Pflanzen gefüllt ist, wird der Zwischenboden 87 für kurze Zeit aus dem Bereich zwischen dem Oberrost 84 und dem Unterrost 85 horizontal in die in Figur 8 gestrichelt dargestellte Lage gezogen, so daß dadurch alle in dem Oberrost 84 befindlichen Pflanzen gleichzeitig in die Rostöffnungen 111 des Unterrostes 85 fallen können. Anschließend stehen die Pflanzen innerhalb des Unterrostes 85 auf dem noch ungefalteten Karton 113, der rechtzeitig vorher von dem Tragearm 45 unter den Unterrost 85 gebracht worden ist und daran anschließend von dem Haltearm 48 in dieser Position gehalten ist.

Anschließend wird der Haltearm 48 zusammen mit dem Rostgehäuse 100 in die in Figur 8 strichpunktiert dargestellte untere Stellung abgesenkt, und zwar so tief, daß die Oberkante des Rostgehäuses 100 sich geringfügig unter der Unterkante des Unterrostes 85 befindet.

Anschließend wird der Verpackungstisch 120 angehoben, so daß er mit den Saugnäpfen 121,122,123,124 den noch ungefalteten Karton 113 unterfaßt. In dieser Position werden die vier das Rostgehäuse 100 bildenden Wandteile 101,102, 103,104 gegeneinandergeschoben, so daß die Pflanzen dadurch auf Kartonmaß gegeneinander verschoben werden. Anschließend werden die Wandteile 101,102,103,104 geringfügig auseinander gezogen, damit die Pflanzen wieder frei werden.

In diesem Zustand werden der Verpackungstisch 120, der noch ungefaltete Karton 113 und das Rostgehäuse 100 abgesenkt, bis ein darunter angeordnetes aus mehreren Rollen 130,131,132,133,134,135,136,137 bestehendes Rollensystem erreicht wird. Durch weiteres Absenken des Verpackungstisches 120 zusammen mit dem Karton 113 und dem Rostgehäuse 100 werden von dem Boden 138 des Kartons 113 die Seitenwände 139,140,141,142 senkrecht hochgeknickt. Anschließend werden durch an schwenkbeweglichen Armen 143,144 befindliche Rollen 145,146 die oberen Laschen 147,148,149, 150 in die waagrechte Ausrichtung geknickt und anschließend Laschen 151,152,153,154 in dafür vorgesehene Aufnahmeöffnungen 155,156,157,158 gedrückt.

Der auf diese Weise fertiggestellte und mit pflanzen gefüllte Karton 159 wird von dem Verpackungstisch 120 auf den Förderer 125 befördert und von diesem auf das abführende Transportband 127 weitergeleitet, von dem aus der fertig verpackte Karton 159 dem Versand zugeführt wird.

## Patentansprüche

1. Verfahren zum Sortieren von jungen Pflanzen nach unterschiedlichen Größen oder Qualitäten, insbesondere nach normalgrossen, übergroßen und untergroßen Pflanzen, wobei
a) die noch nicht sortierten Pflanzen in Reihe nebeneinander mit jeweils gleichen Abständen zueinander und in der Reihe geradlinig ausgerichtet in Kulturplatten (Trays) zu einer Übergabestation transportiert,
b) die in Reihen nebeneinander stehenden Pflanzen an der Übergabestation auch reihenweise aus den Kulturplatten entnommen und auf ein von den Kulturplatten distanziertes Haupttransportband übergeben,
c) die Pflanzen während ihrer Übergabe von den Kulturplatten auf das Haupttransportband bezüglich ihrer Größen oder Qualitäten gemessen,
d) die einzelnen Meßwerte mittels einer elektrischen Datenverarbeitungsanlage elektronisch verarbeitet und gespeichert und
e) die Pflanzen auf dem Haupttransportband transportiert und nach ihren Größen oder Qualitäten, insbesondere nach normalgroßen, übergroßen und untergroßen Pflanzen sortiert werden.

2. Verfahren nach Anspruch 1, dadurch gekennzeichnet, daß mehrere nebeneinander angeordnete und mit Pflanzen gefüllte Kulturplatten (Trays) auf einem Transportboden zu der Übergabestation transportiert werden und daß die jeweils der Übergabestation am nächsten befindliche Reihe Pflanzen insgesamt und gleichzeitig aus den jeweils vordersten Trays angehoben, von hier auf das Transportband übergeben und während der Übergabe von den Trays zum Transportband fotografisch bezüglich ihrer Größe oder Qualität gemessen werden.

3. Verfahren nach Anspruch 1 oder 2, dadurch gekennzeichnet, daß die auf das Transportband übergebenen und hier abgesetzten Pflanzen in eine erste Sortiereinrichtung transportiert werden, in der die normalgroßen Pflanzen auf ein erstes Parallelband hinübergesetzt werden, worauf die auf dem Haupttransportband verbliebenen übergroßen und untergroßen Pflanzen auf dem Transportband weiter in eine zweite Sortierstation transportiert werden, in der die übergroßen Pflanzen auf ein zweites Parallelband hinübergesetzt werden, und wonach die untergroßen Pflanzen auf dem Haupttransportband weiter in eine dritte Sortierstation transportiert werden, in der die untergroßen Pflanzen auf ein drittes Parallelband hinübergesetzt werden.

4. Verfahren zum Verpacken von jungen Pflanzen, die nach unterschiedlichen Größen oder Qualitäten, insbesondere nach normalgroßen, übergroßen und untergroßen Pflanzen, sortiert sind, wobei
a) jeweils die Pflanzen einer bestimmten Größe oder Qualität auf einem diesen Pflanzen zugeordneten Transportband in eine diesen Pflanzen zugeordnete Verpackungsstation transportiert werden,
b) die Pflanzen in der Verpackungsstation von oben her in einen Verpackungsrost eingefüllt werden,
c) die Pflanzen aus dem Verpackungsrost auf einen unter dem Verpackungsrost gehaltenen noch ungefalteten Karton gestellt werden und
d) der Karton um die Pflanzen herum gefaltet und geschlossen wird.

5. Verfahren nach Anspruch 4, dadurch gekennzeichnet, daß bei Vorliegen von normalgroßen, übergroßen und untergroßen Pflanzen die normalgroßen Pflanzen auf einem ersten Parallelband in eine erste Verpackungsstation, die übergroßen Pflanzen auf einem zweiten Parallelband in eine zweite Verpackungsstation und die untergroßen Pflanzen auf einem dritten Parallelband in eine dritte Verpackungsstation transportiert werden, daß die Pflanzen in den jeweiligen Verpackungsstationen von oben her in die Verpackungsroste der Verpackungsstationen eingefüllt werden, daß die Pflanzen aus den Verpackungsrosten auf jeweils unter den Verpackungsrosten gehaltene noch ungefaltete Kartons gestellt werden und daß die Kartons um die Pflanzen herum gefaltet und geschlossen werden.

6. Verfahren nach Anspruch 4 oder 5, dadurch gekennzeichnet, daß die Pflanzen in der jeweiligen Verpackungsstation reihenweise und zeilenweise in einen Verpackungsrost gefüllt, hier vorverpackt und anschließend in einem Karton verpackt werden.

7. Anlage zum Sortieren von jungen Pflanzen nach unterschiedlichen Größen oder Qualitäten, insbesondere nach normalgroßen, übergroßen und untergroßen Pflanzen, wobei
a) ein Transportboden zum Heranführen von Kulturplatten (Trays) mit in diesen befindlichen noch nicht sortierten Pflanzen vorgesehen ist, die in den Trays in Reihen nebeneinander mit jeweils gleichen Abständen zueinander und in der Reihe geradlinig ausgerichtet angeordnet sind,
b) am Ausgangsende des Transportbodens eine Übergabestation zum Übergeben der in Reihen nebeneinander ausgerichteten Pflanzen an die Übergabestation reihenweise von dem Transportboden auf ein vom Transportboden distanziertes Haupttransportband vorgesehen ist,
c) in Transportrichtung am Ende des Transportbodens eine Anzahl Hebestifte in einer geradlinigen Reihe vorgesehen ist, mit denen alle in den Trays nebeneinander befindlichen Pflanzen der jeweils ersten Reihe insgesamt und gleichzeitig mit Wurzelballen aus den Trays um eine bestimmte Höhe nach oben anzuheben sind,
d) die Übergabestation einen Übergabeträger mit Greifern aufweist,
e) die Übergabestation mit einer Meßeinrichtung zum Messen der Pflanzen nach ihren unterschiedlichen Größen bzw. Qualitäten ausgerüstet ist,
f) eine Speichereinrichtung für die Speicherung der gemessenen Daten der einzelnen Pflanzen vorgesehen ist und
g) in Transportrichtung des Transportbandes für den Weitertransport der zu sortierenden Pflanzen hintereinander mehrere Sortierstationen, insbesondere eine erste Sortierstation, eine zweite Sortierstation und eine dritte Sortierstation zum Sortieren der noch unsortierten Pflanzen vorgesehen sind.

8. Anlage nach Anspruch 7, dadurch gekennzeichnet, daß als Speichereinrichtung ein Computer bzw. ein Rechner vorgesehen ist.

9. Anlage nach Anspruch 7 oder 8, dadurch gekennzeichnet, daß in der Übergabestation der Übergabeträger um eine parallel zum Haupttransportband angeordnete Achse schwenkbeweglich angeordnet ist und eine Anzahl Greifer für jeden Wurzelballen hat, mit denen die Wurzelballen zu erfassen und auf das Haupttransportband abzusetzen sind.

10. Anlage nach einem der Ansprüche 7 bis 9, dadurch gekennzeichnet, daß auf dem Haupttransportband im Bereich des Übergabeträgers eine Anzahl von rohrförmigen Aufnahmebehältern für die Aufnahme der Pflanzen vorgesehen ist, oberhalb deren sich nach unten verjüngende Fülltrichter vorgesehen sind, in die die Pflanzen von dem Übergabeträger hineinzugeben sind und von denen aus die Pflanzen in die Aufnahmebehälter gelangen.

11. Anlage nach einem der Ansprüche 7 bis 10, dadurch gekennzeichnet, daß die erste Sortierstation ein erstes Parallelband aufweist und daß eine der Anzahl der in einer Reihe befindlichen Pflanzen entsprechende bestimmte Anzahl von Schubkolbengetrieben in Form von Zylindern mit Saugnäpfen an dem Kolbenstangenende vorgesehen sind, mit denen entsprechend den gespeicherten Daten der in der Übergabestation durchgeführten Messungen der Pflanzengrößen oder Pflanzenqualitäten die Aufnahmebehälter mit den normalgroßen Pflanzen von dem Haupttransportband auf das erste Parallelband hinüberzubringen sind.

12. Anlage nach einem der Ansprüche 7 bis 11, dadurch gekennzeichnet, daß die zweite Sortierstation ein zweites Parallelband aufweist und eine bestimmte andere Anzahl von Schubkolbengetrieben in Form von Zylindern mit Saugnäpfen an den Kolbenstangenenden vorgesehen ist, mit denen entsprechend den gespeicherten Daten der in der Übergabestation durchgeführten Messungen der Pflanzengrößen bzw. Pflanzenqualitäten die Aufnahmebehälter mit den übergroßen Pflanzen von dem Haupttransportband auf das zweite Parallelband hinüberzubringen sind.

13. Anlage nach nach einem der Ansprüche 7 bis 12, dadurch gekennzeichnet, daß die dritte Sortierstation ein drittes Parallelband aufweist und eine bestimmte noch andere Anzahl von Schubkolbengetrieben in Form von Zylindern mit Saugnäpfen an dem Kolbenstangenende vorgesehen ist, mit denen entsprechend den gespeicherten Daten der in der Übergabestation durchgeführten Messungen der Pflanzengrößen bzw. Pflanzenqualitäten die Aufnahmebehälter mit den untergroßen Pflanzen von dem Haupttransportband auf das dritte Parallelband hinüberzubringen sind.

14. Anlage nach einem der Ansprüche 7 bis 13, dadurch gekennzeichnet, daß die der ersten Sortierstation nachgeordneten weiteren Sortierstationen abgesehen von der Anzahl der Schubkolbengetriebe, im wesentlichen wie die erste Sortierstation ausgebildet sind.

15. Anlage zum Verpacken von jungen Pflanzen, die nach unterschiedlichen Größen oder Qualitäten, insbesondere nach normalgroßen, übergroßen und untergroßen Pflanzen, sortiert sind, wobei
a) ein Haupttransportband vorgesehen ist, das aus einem auf der Vorderseite der Anlage angeordneten vorwärts laufenden Transportband und einem auf der Rückseite der Anlage angeordneten rückwärts laufenden Transportband besteht, und das Haupttransportband sich von einer Übergabestation bis zum Ende der Anlage erstreckt,
b) auf der Länge des Haupttransportbandes verteilt mehrere Sortierstationen und mehrere Verpakkungsstationen vorgesehen sind,
c) in Transportrichtung des Haupttransportbandes im Anschluß an die Übergabestation eine erste Sortierstation vorgesehen ist, hinter der eine erste Verpackungsstation angeordnet ist und
d) im weiteren Verlauf des Haupttransportbandes eine zweite Sortierstation mit einer zweiten Verpackungsstation und weiterhin eine dritte Sortierstation mit einer dritten Verpackungsstation vorgesehen sind.

16. Anlage nach Anspruch 15, dadurch gekennzeichnet, daß in Transportrichtung des Haupttransportbandes hinter der ersten Sortierstation eine erste Verpackungsstation vorgesehen ist, die einen oberen Füllrost, einen darunter befindlichen unteren Füllrost und einen höhenverlagerbaren Verpackungstisch aufweist.

17. Anlage nach Anspruch 15 oder 16, dadurch gekennzeichnet, daß der obere Füllrost mit zwei gegeneinander beweglichen Abdeckplatten abgedeckt ist und zwischen dem oberen und dem unteren Füllrost eine horizontalbewegliche Trennplatte vorgesehen ist.

18. Anlage nach einem der Ansprüche 15 bis 17, dadurch gekennzeichnet, daß mit Abstand oberhalb des oberen Füllrostes ein Schwenkträger mit einer bestimmten Anzahl von Greifern vorgesehen ist, mit denen eine zu bestimmende Anzahl von Aufnahmebehältern mit den normalgroßen Pflanzen von dem ersten Parallelband in Form einer ganzen Reihe gleichzeitig in eine vorbestimmte Positon oberhalb des oberen Rostes zu positionieren sind.

19. Anlage nach einem der Ansprüche 15 bis 18, dadurch gekennzeichnet, daß auf der Seite des zurücklaufenden Haupttransportbandes ein Kartonmagazin und eine Kartongebereinrichtung mit vier nach oben orientierten Saugnäpfen vorgesehen sind, mit der jeweils ein vorgefertigter noch ungefalteter Karton aus dem Kartonmagazin zu entnehmen und unter den unteren Füllrost zu halten ist.

20. Anlage nach einem der Ansprüche 15 bis 19, dadurch gekennzeichnet, daß mit Abstand unterhalb des unteren Kartons ein höhenverstellbarer Verpackungstisch mit vier nach oben orientierten Saugnäpfen vorgesehen ist, auf dem der mit Pflanzen gefüllte Karton an den Seitenwänden und den oberen Flanschen geknickt bzw. gefaltet und fertig zu verpacken ist.

21. Anlage nach einem der Ansprüche 15 bis 20, dadurch gekennzeichnet, daß ein den unteren Füllrost umfassendes höhenverlagerbares und in horizontaler Ebene in der Länge und Breite variierbares Rostgehäuse vorgesehen ist.

22. Anlage nach einem der Ansprüche 15 bis 21, dadurch gekennzeichnet, daß das Rostgehäuse aus vier sich überlappenden Kantenbereichen besteht, die in der horizontalen Ebene gemeinsam und gleichzeitig verlagerbar sind.

23. Anlage nach einem der Ansprüche 15 bis 22, dadurch gekennzeichnet, daß die der ersten Verpackungsstation nachgeordneten Verpackungsstationen im wesentlichen wie die erste Station ausgebildet sind.
